# EUROPÄISCHE PATENTSCHRIFT

(11) **EP 3 693 596 B1**
(45) Veröffentlichungstag und Bekanntmachung des Hinweises auf die Patenterteilung: **11.03.2026**
(21) Anmeldenummer: 20152278.6
(22) Anmeldetag: 16.01.2020
(51) Int. Cl.: F02M 35/10, F02M 35/108, F02B 33/34, F02B 67/10, F02B 25/04, F02B 37/04, F02B 39/10, F02B 39/16, F02D 9/02, F02D 23/00, F02D 41/00

(54) **GROSSMOTOR MIT HILFSGEBLÄSE SOWIE BETRIEBSVERFAHREN**
LARGE MOTOR WITH AUXILIARY BLOWER AND METHOD OF OPERATION
GROS MOTEUR POURVU DE PULSEUR D'AIR AUXILIAIRE ET PROCÉDÉ DE FONCTIONNEMENT

(30) Priorität: 08.02.2019 EP 19156243
(43) Veröffentlichungstag der Anmeldung: 12.08.2020
(73) Patentinhaber: WinGD AG, 8400 Winterthur (CH)
(72) Erfinder: Hansen, Lars, 8267 Berlingen (CH)
(74) Vertreter: IPS Irsch AG

(56) Entgegenhaltungen:
- WO-A1-2013/126347
- DK-B1- 178 102
- US-A- 2 924 069
- US-A1- 2012 192 559

## Beschreibung

Die Erfindung betrifft einen längsgespülten Grossmotor sowie ein Verfahren zum Betreiben des längsgespülten Grossmotors.

Grossmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien.

Ein weiterer wesentlicher Punkt ist seit einigen Jahren mit zunehmender Bedeutung die Qualität der Abgase, insbesondere die Stickoxid Konzentration in den Abgasen. Hier werden die rechtlichen Vorgaben und Grenzwerte für die entsprechenden Abgasgrenzwerte immer weiter verschärft. Das hat insbesondere bei Zweitakt-Grossdieselmotoren zur Folge, dass die Verbrennung des klassischen, mit Schadstoffen hoch belasteten Schweröls, aber auch die Verbrennung von Dieselöl oder anderen Brennstoffen problematischer wird, weil die Einhaltung der Abgasgrenzwerte immer schwieriger, technisch aufwändiger und damit teurer wird, oder am Ende deren Einhaltung gar nicht mehr sinnvoll möglich ist.

In der Praxis besteht daher bereits seit langem das Bedürfnis nach sogenannten "Dual-Fuel Motoren", also Motoren, die mit zwei unterschiedlichen Brennstoffen betrieben werden können. In einem Gasmodus wird ein Gas, z.B. ein Erdgas wie LNG (liquefied natural gas), oder ein Gas in Form eines Autogases oder eines anderen zum Antrieb einer Brennkraftmaschine geeigneten Gases verbrannt, während in einem Flüssigmodus ein geeigneter flüssiger Brennstoff wie Benzin, Diesel, Schweröl, Alkohole, Ölderivate und deren Wassergemische, Biotreibstoffe, oder andere geeignete flüssige Brennstoffe in demselben Motor verbrannt werden können. Die Motoren können dabei sowohl Zweitakt- als auch Viertaktmotoren sein, insbesondere auch längsgespülte Zweitakt-Grossdieselmotoren.

Ein Dual-Fuel Grossdieselmotor kann also ausser im Dieselbetrieb, der durch die Selbstzündung des Brennstoffs gekennzeichnet ist, auch in einem Ottobetrieb, der durch die Fremdzündung des Brennstoffs gekennzeichnet ist, betrieben werden. Insbesondere kann die Selbstzündung des Brennstoffs auch zur Fremdzündung eines anderen Brennstoffs genutzt werden.

Im Flüssigmodus wird üblicherweise der Brennstoff direkt in den Brennraum des Zylinders eingebracht und verbrennt dort nach dem Prinzip der Selbstzündung bzw. nach dem Prinzip der Diffusionsverbrennung. Im Gasmodus ist es bekannt, nach dem Otto-Prinzip das Gas im gasförmigen Zustand mit der Spülluft zu vermischen, um so im Brennraum des Zylinders ein zündfähiges Gemisch zu erzeugen. Bei diesem Niederdruckverfahren erfolgt die Zündung des Gemisches im Zylinder üblicherweise, indem im richtigen Moment eine kleine Menge flüssiger Brennstoff in den Brennraum des Zylinders oder in eine Vorkammer eingespritzt wird, die dann zur Zündung des Luft-Gas-Gemisches führt. Natürlich kann das Luft-Gas-Gemisch auch elektrisch oder auf eine andere an sich bekannte Methode fremdgezündet werden. Ein Dual-Fuel Motor kann während des Betriebs vom Gasmodus in den Flüssigmodus umgeschaltet werden und umgekehrt.

Insbesondere im Gasmodus kommt dem Einstellen des korrekten Verhältnisses von Spülluft zu Gas, dem sogenannte Luft-Gas-Verhältnis oder Luft-Brennstoff-Verhältnis, eine entscheidende Bedeutung zu. Dieses Verhältnis aus Luft zu Brennstoff ist zwar auch im Flüssigmodus bzw. im Dieselbetrieb von Bedeutung, jedoch sind die Auswirkungen eines nicht optimalen Luft-Brennstoffverhältnisses im Gasmodus in der Regel ausgeprägter als im Flüssigmodus.

In einem Grossmotor wird die Spül- oder Ladeluft für die Zylinder üblicherweise von einem Turbolader bereitgestellt, der einen Massenstrom an Spülluft generiert, der unter dem Spülluft- oder Ladedruck zum Einbringen in die Zylinder bereitsteht. Der Turbolader, der auch als Abgasturbolader bezeichnet wird, umfasst typischerweise eine Turbine und einen von der Turbine angetriebenen Kompressor, wobei die Turbine mit Abgasen des Grossmotors angetrieben wird. Der Kompressor saugt frische Umgebungsluft an und komprimiert diese zum Bereitstellen der Spülluft. Üblicherweise ist dem Turbolader noch ein Ladeluftkühler nachgeschaltet, um die Spülluft zu kühlen, bevor sie den Zylindern zugeführt wird.

Die von dem Turbolader gelieferte Spülluftmenge bzw. der generierte Ladedruck hängen dabei von einer Last des Grossmotors und damit von einer Leistung bzw. von einem Drehmoment bzw. einer Drehzahl des Grossmotors ab. Zudem ist es üblich, die Leistung des Turboladers mit Hilfe eines Abgasventils einzustellen, welches auch als Waste-Gate-Ventil bezeichnet wird. Mit diesem Abgasventil lässt sich der Massenstrom des Abgases einstellen, welcher der Turbine zugeführt wird. Ist das Abgasventil ganz oder teilweise geöffnet, so wird ein Teil des Abgases an der Turbine des Turboladers vorbeigeführt, sodass dieser nicht seine maximal mögliche Leistung erbringt. Ist das Abgasventil komplett geschlossen, so wird der gesamte Massenstrom der Abgase der Turbine des Turboladers zugeführt, sodass der Turbolader dann seine maximal mögliche Leistung erbringt, also den maximal möglichen Massenstrom an Ladeluft generiert.

Es ist bekannt, die Einstellung des Abgasventils, und damit den dem Turbolader zum Antrieb zugeführte Massenstrom an Abgasen, in Abhängigkeit von der Last, mit welcher der Grosslmotor aktuell betrieben wird, zu verändern. Dabei ist es angestrebt, einen vom Turbolader generierten Ladedruck, welcher im Wesentlichen der Druck der Luft am Ausgang des Kompressors ist, für den jeweiligen Lastzustand konstant zu halten. Typischerweise nimmt der gewünschte Ladedruck mit zunehmender Last des Grossmotors zu. So wird beispielsweise im unteren Lastbereich ein niedrigerer Ladedruck benötigt als im mittleren oder oberen Lastbereich. Dementsprechend sind in einer Motorsteuerung bzw. in einer Kontrollvorrichtung für den Grossmotor Daten hinterlegt, welche jeder Last oder jedem Lastbereich des Grossmotors einen Ladedruck zuordnen. Abhängig von der jeweils aktuellen Last wird dann das Abgasventil so eingestellt, dass der Turbolader den gewünschten Ladedruck für die Ladeluft bereitstellt.

Insbesondere, wenn der Gasmodus nach dem Otto-Prinzip betrieben wird, ist die korrekte Einstellung des Luft-Gas-Verhältnisses von entscheidender Bedeutung für einen möglichst schadstoffarmen, effizienten und wirtschaftlichen Betrieb des Grossmotors. Ist der Gasanteil zu hoch, so wird das Luft-Gas-Gemisch zu fett. Die Verbrennung des Gemischs erfolgt zu schnell oder zu früh was zu hohen mechanischen Belastungen, zum Klopfen des Grossmotors und zu einer signifikanten Schadstofferhöhung in Abgas führen kann. Da der Verbrennungsprozess dann nicht mehr korrekt auf die Kolbenbewegung im Zylinder abgestimmt ist, führt dies unter anderem auch dazu, dass die Verbrennung teilweise gegen die Bewegung des Kolbens arbeitet.

Auch wenn die korrekte Einstellung des Luft-Gas-Verhältnisses in modernen Grossmotoren unter normalen Betriebsbedingungen keine grösseren Probleme mehr darstellt, so gibt es spezielle Betriebsbedingungen, die zu erheblichen Schwierigkeiten führen können.

Als ein Beispiel seien hier schnelle Lastwechsel und geringe Lastbereiche des Grossmotors genannt, welche zu einer Reduktion eines Massenstroms von Ladeluft im Turbolader führen. Dieser reduzierte Massenstrom der Ladeluft kann insbesondere im Gasbetrieb, der ja sehr empfindlich auf das Luft-Gas-Verhältnis reagiert, dazu führen, dass die Gasverbrennung in einen Luftmangelbereich gerät, d.h. das Luft-Gas-Verhältnis im Zylinder sinkt und es kann passieren, dass das Luft-Gas-Gemisch zu fett wird, sodass der Grossmotor in den Bereich der zu schnellen und unbeständige Verbrennung gerät, die zu hohen mechanischen Belastungen oder sehr hohen Schadstoffemissionen führt.

Um diese Probleme zu lösen, werden im Stand der Technik Hilfsgebläse mit einer einzigen Drehzahl verwendet, um ausreichend Ladeluft zur Verfügung zu stellen, welche den Zylindern über einen Einlassreceiver zugeführt werden kann. Diese Hilfsgebläse mit einer einzigen Drehzahl können jedoch für niedrige Lastbereiche des Grossmotors einen zu starken Massenstrom erzeugen, wodurch das Luft-Brennstoff-Gemisch zu viel Luft enthält, was zu einer unbeständigen Verbrennung oder zu Zündaussetzern führen kann.

Die Die EP 3 109 444 offenbart deshalb eine Methode, das sogenannte "eEVO-Verfahren" (early exhaust vale opening), zum Betreiben eines Grossmotors, mit welcher eine stabile Verbrennung in niedrigen Lastbereichen ermöglicht wird. Hierfür wird ein Auslassventil an einem Zylinder des Grossmotors in niedrigen Lastbereichen bei einem Kurbelwinkel zwischen 15° und 80° geöffnet ("frühes Öffnen" der Auslassventile), um das Luft-Brennstoffverhältnis anzupassen. Auch wenn sich dieses Verfahren in der Praxis sehr bewährt hat, um das Luft-Brennstoffverhältnis auch im unteren Lastbereich in den gewünschten Grenzen zu halten, so ist es unter energetischen Aspekten weniger vorteilhaft, denn ein Teil der beim Verbrennungsprozess generierten Energie wird durch das frühe Öffnen in das Abgassystem abgeführt und steht daher nicht mehr für die Expansionsarbeit zur Verfügung, welche den Kolben nach unten bewegt. Dieses Verfahren führt daher im unteren Lastbereich zu einem erhöhten Gasverbrauch und damit zu einer reduzierten Energieeffizienz des Grossmotors.

Als Alternative zum frühen Öffnen der Auslassventile, ist im Stand der Technik die Verwendung von Hilfsgebläsen mit einer einstellbaren Drehzahl bekannt. Diese Hilfsgebläse mit der einstellbaren Drehzahl sind einerseits sehr teuer und andererseits reagieren sie häufig zu träge, d.h. nur sehr langsam auf schnelle Lastwechsel. Aus DK 178102 B1, US 2012/192559 A1 und US 2924069 A sind Grossmotoren bekannt, die mehrere Turbolader und/oder ein mechanisch angetriebenes Hilfsgebläse stromab eines Turboladers aufweisen.

Die Aufgabe der Erfindung ist es daher, einen Grossmotor vorzuschlagen, welcher die aus dem Stand der Technik bekannten Nachteile vermeidet. Ferner ist es eine Aufgabe der Erfindung ein verbessertes Verfahren zum Betreiben eines Grossmotors vorzuschlagen, welcher die aus dem Stand der Technik bekannten Nachteile vermeidet.

Die diese Aufgaben lösenden Gegenstände der Erfindung sind durch die Merkmale der unabhängigen Ansprüche 1 und 10 gekennzeichnet.

Die Erfindung betrifft einen längsgespülten Grossmotor mit mindestens einem Zylinder, welcher einen Brennraum zur Verbrennung eines Luft-Brennstoffgemisches aufweist, Spülluftöffnungen zum Zuführen von Ladeluft in den Zylinder und ein Auslassventil zum Abführen von Verbrennungsgasen aus dem Zylinder. Der Grossmotor umfasst ausserdem einen Einlassreceiver für die Ladeluft, welcher mit den Spülluftöffnungen strömungsverbunden ist, sowie einen mittels der Verbrennungsgase antreibbaren Turbolader zum Bereitstellen der Ladeluft im Einlassreceiver. Ausserdem umfasst der Grossmotor mindestens ein Hilfsgebläse, mit welchem zusätzliche Spülluft in den Einlassreceiver eingebracht werden kann. Hierbei ist stromaufwärts des Hilfsgebläses eine Drosselvorrichtung angeordnet, mit welcher ein Massenstrom der zusätzlichen Spülluft verändert werden kann. Darüber hinaus umfasst das Hilfsgebläse einen Antrieb, der unabhängig von den Verbrennungsgasen des Grossmotors ist.

Durch die vorliegende Erfindung wird ein an Last- und Betriebsbedingungen des Grossmotors angepasster Massenstrom der Ladeluft ermöglicht, sodass im Brennraum ein korrektes Verhältnis aus Luft und Brennstoff eingestellt werden kann, wodurch eine unbeständige Verbrennung und Zündaussetzer vermieden werden. Der Massenstrom der Ladeluft wird hierbei über einen Strömungsquerschnitt der Drosselvorrichtung angepasst.

Mit dem erfindungsgemässen Hilfsgebläse mit der Drosselvorrichtung ist es also auch möglich, in einem niedrigen Lastbereich des Grossmotors den Massenstrom der zusätzlichen Spülluft derart einzustellen, dass eine unbeständige Verbrennung im Grossmotor durch einen zu hohen Luftanteil verhindert wird. Als niedriger oder geringer Lastbereich des Grossmotors wird insbesondere eine Last von 35% der Volllast oder weniger angesehen. Im speziellen kann als niedriger oder geringer Lastbereich des Grossmotors eine Last nahe 0% angesehen werden, inbesondere 0,5% bis 15%, im speziellen 5% bis 35%. Ausserdem ist der niedrige oder geringe Lastbereich ein Betriebsbereich, in welchem der Turbolader alleine, d. h. ohne ein Hilfsgebläse, keinen ausreichenden Massenstrom für die Ladeluft zur Verfügung stellen kann.

In einer besonders bevorzugten Ausführung umfasst die Drosselvorrichtung eine Drosselklappe und eine durch die Drosselklappe verschliessbare Öffnung. Hierbei kann durch Einstellen eines Öffnungswinkels der Drosselklappe der Massenstrom der zusätzlichen Spülluft eingestellt werden. Der Öffnungswinkel ist hierbei der Winkel zwischen der Öffnung der Drosselvorrichtung und der Drosselklappe. Ist der Öffnungswinkel 90°, ist die Drosselklappe vollständig geöffnet und es wird ein maximaler Massenstrom der zusätzlichen Spülluft vom Hilfsgebläse zum Einlassreceiver ermöglicht. Ist der Öffnungswinkel 0°, ist die Drosselklappe vollständig geschlossen und es erfolgt kein Massenstrom von zusätzlicher Spülluft vom Hilfsgebläse zum Einlassreceiver.

Die Drosselklappe kann entweder an einer Seite der Öffnung der Drosselvorrichtung klappbar befestigt sein, oder zentral an der Öffnung der Drosselvorrichtung in Form einer Absperrklappe rotierbar befestigt sein.

In den niedrigen Lastbereichen des Grossmotors wird der Öffnungswinkel vorzugsweise zwischen 45° und 90° eingestellt, insbesondere zwischen 50° und 90°, im speziellen zwischen 60° und 90°. Je nach Betriebsbedingung kann der Öffnungswinkel selbstverständlich auf jeden Wert zwischen 0° und 90° eingestellt werden.

Allgemein wird der Massenstrom der zusätzlichen Spülluft durch erniedrigen des Öffnungswinkels verringert und durch Vergrössern des Öffnungswinkels erhöht. Durch erniedrigen des Öffnungswinkels wird hierbei der Strömungsquerschnitt der Drosselvorrichtung verringert und durch vergrössern des Öffnungswinkels der Strömungsquerschnitt der Drosselvorrichtung vergrössert.

Selbstverständlich kann die Drosselvorrichtung auch als ein geeignetes Ventil, als Absperrschieber, Kugelhahn oder ein anderes Absperrorgan ausgestaltet sein, welches ein Einstellen des Strömungsquerschnittes erlaubt.

Besonders bevorzugt ist das erfindungsgemässe Hilfsgebläse nur bei einer Drehzahl betreibbar. Dazu wird das Hilfsgebläse beispielsweise mit einem Elektromotor angetrieben, der bei einer festen Frequenz arbeitet, z. B. mit einem Synchronmotor, der mit der Netzfrequenz gespeist wird. Ausserdem kann stromabwärts des Hilfsgebläses eine Rückschlagvorrichtung angeordnet sein, sodass die Ladeluft nur in Richtung des Einlassreceivers strömen kann. Hierdurch wird ein Zurückströmen von Ladeluft aus dem Einlassreiceiver, z. B. zum Hilfsgebläse, bei einem starken Betrieb des Turboladers (hohem Ladeluftdruck im Einlassreceiver) vermieden.

Der Grossmotor kann ausserdem eine Kontrollvorrichtung zur lastabhängigen Kontrolle des Massenstroms der zusätzlichen Spülluft der Drosselvorrichtung umfassen. Durch die Kontrollvorrichtung wird dann der Strömungsquerschnitt der Drosselvorrichtung, insbesondere der Öffnungswinkel der Drosselklappe oder die Stellung eines Schiebers, eingestellt und an die jeweiligen Betriebsbedingungen angepasst. Liefert der Tubolader zum Beispiel so viel Ladeluft, dass die Gefahr eines zu hohen Luft-Brennstoffverhältnisses besteht, so verschliesst die Kontrollvorrichtung die Drosselvorrichtung zumindest teilweise, sodass der Massenstrom der von dem Hilfsgebläse in den Einlassreceiver gelieferten Spülluft abnimmt, wodurch sich das Luft-Brennstoffverhältnis im Zylinder zu niedrigeren Werten verschiebt.. In den niedrigen Lastbereichen, in welchen der Gesamtstrom der vom Turbolader und vom Hilfsgebläse gelieferten Ladeluft zu gross wäre, steuert oder regelt die Kontrollvorrichtung die Drosselvorrichtung und folglich den Massenstrom der zusätzlichen, vom Hilfsgebläse gelieferten Ladeluft so, dass das richtige Luft-Brennstoffverhältnis im Zylinder erreicht wird.

Für viele Anwendungen kann das Hilfsgebläse mit der Drosselvorrichtung als Ersatz für das eEVO (early exhaust valve opening) Verfahren verwendet werden, wodurch im niedrigen Lastbereich ein deutlich energieeffizienterer Betrieb des Grossmotors ermöglicht wird und gleichzeitig auch nachteilige Torsionsschwingungen vermeidbar sind. Es versteht sich aber, dass es auch möglich ist, die erfindungsgemässe Lösung mit dem eEVO Verfahren zu kombinieren, beispielsweise indem der Kurbelwinkel für das Öffnen des Auslassventils nicht so sehr zu kleineren Werten verschoben wird wie beim üblichen eEVO Verfahren, sodern dass das Luft-Brennstoffverhältnis im Zylinder über die Kombination eines früheren Öffnen des Auslassventils und der erfindungsgemässen Drossselung des Hilfsgebläses auf den korrekten Wert eingestellt wird.

In einer bevorzugten Ausgestaltung ist der längsgespülte Grossmotor als längsgespülter Zweitakt-Grossdieselmotor ausgestaltet.

Insbesondere kann der Grossmotor auch als Dual-Fuel Grossdieselmotor ausgestaltet sein, der in einem Flüssigmodus betreibbar ist, in welchem ein flüssiger Brennstoff zur Verbrennung in einen Brennraum eingebracht wird, und der ferner in einem Gasmodus betreibbar ist, in welchem ein Gas als Brennstoff in den Brennraum eingebracht wird.

Die Erfindung betrifft weiter ein Verfahren zum Betreiben des erfindungsgemässen längsgespülten Grossmotors. Hierbei wird der erfindungsgemässe Grossmotor mit dem Hilfsgebläse und der Drosselvorrichtung bereitgestellt und der Massenstrom der zusätzlichen Spülluft wird durch Änderung des Strömungsquerschnitts stromaufwärts des Hilfsgebläses eingestellt. Der Strömungsquerschnitt stromaufwärts des Hilfsgebläses wird durch die Drosselvorrichtung verändert. Umfasst die Drosselvorrichtung dabei eine Drosselklappe kann der Strömungsquerschnitt wie vorrangehend beschreiben über den Öffnungswinkel der Drosselklappe verändert werden.

Vorzugsweise wird der Strömungsquerschnitt stromaufwärts des Hilfsgebläses in Abhängigkeit von der Last des Grossmotors mittels der Drosselvorrichtung gesteuert. Hierfür kann insbesondere der Strömungsquerschnitt mit einer zunehmenden Last des Grossmotors mittels der Drosselvorrichtung kontinuierlich vergrössert werden. Dies kann zum Beispiel mittels eines vorgebbaren Schemas erfolgen, welches jeder Last des Grossmotors einen bestimmten Strömungsquerschnitt zuordnet.

In einer sehr einfachen Ausgestaltung kann die Drosselvorrichtung auch nur zwei oder ein paar wenige Stellungen haben. Bei zwei Stellungen ist dann beispielsweise eine Stellung diejenige, in welcher der Strömungsquerschnitt vollkommen offen ist (ungedrosselter Zustand) und die andere Stellung (gedrosselter Zustand) ist diejenige, bei welcher der Strömungsquerschnitt durch die Drosselvorrichtung verkleinert wird. Das Umschalten vom ungedrosselten Zustand in den gedrosselten Zustand kann dann beispielsweise bei einem vorgebbaren Lastwert erfolgen.

Alternativ kann der Strömungsquerschnitt stromaufwärts des Hilfsgebläses in Abhängigkeit einer Last des Grossmotors mittels der Drosselvorrichtung geregelt werden. Hierfür wird insbesondere der Strömungsquerschnitt stromaufwärts des Hilfsgebläses in Abhängigkeit einer Last des Grossmotors mittels der Drosselvorrichtung in Abhängigkeit eines vorgebbaren Luft-Brennstoffverhältnis geregelt.

Im Folgenden wird die Erfindung sowohl in apparativer als auch in verfahrenstechnischer Hinsicht anhand von Ausführungsbeispielen unter Bezugnahme auf die Zeichnung näher erläutert. In der Zeichnung zeigen in schematischer Darstellung:
- Fig. 1: eine schematische Darstellung eines Ausführungsbeispiels eines erfindungsgemässen längsgespülten Grossmotors,
- Fig. 2: ein weiteres Ausführungsbeispiel eines erfindungsgemässen längsgespülten Grossmotors, und
- Fig. 3: einen Querschnitt eines Kühlers eines erfindungsgemässen längsgespülten Grossmotors.

Mit dem Begriff "Grossmotor" sind solche Motoren gemeint, wie sie üblicherweise als Hauptantriebsaggregate für Schiffe oder auch im stationären Betrieb, z.B. zum Antrieb grosser Generatoren zur Erzeugung elektrischer Energie eingesetzt werden. Typischerweise haben Zylinder eines Grossmotors jeweils einen Innendurchmesser (Bohrung), der mindestens etwa 200 mm beträgt.

Ein Dual-Fuel Grossmotor ist ein Motor, der mit zwei unterschiedlichen Brennstoffen betrieben werden kann. Im speziellen kann der Grossmotor in einem Flüssigmodus betrieben werden, in welchem nur ein flüssiger Brennstoff in einen Brennraum eines Zylinders eingespritzt wird. Üblicherweise wird der flüssige Brennstoff, beispielsweise Schweröl oder ein Dieselöl zu einem geeigneten Zeitpunkt direkt in den Brennraum eingespritzt und entzündet sich dort nach dem Diesel-Prinzip der Selbstzündung. Der Grossmotor kann aber auch in einem Gasmodus betrieben werden, bei dem ein als Brennstoff dienendes Gas, beispielsweise Erdgas, in Form eines Luft-Gas-Gemisches im Brennraum zur Zündung gebracht wird. Im speziellen arbeitet das hier beschriebene Ausführungsbeispiel des Grossmotors im Gasmodus nach einem Niederdruckverfahren, d.h. das Gas wird im gasförmigen Zustand in den Zylinder eingebracht. Mit einem Niederdruckverfahren ist gemeint, dass der Einspritzdruck, mit welchem der gasförmige Brennstoff in den Brennraum des jeweiligen Zylinders eingespritzt wird, höchsten 100 bar (10 MPa) beträgt. Vorzugsweise ist der Einspritzdruck maximal 50 bar (5 MPa) und besonders bevorzugt höchstens 20 bar (2 MPa). Der maximale Einspritzdruck für den gasförmigen Brennstoff kann aber noch kleiner sein, beispielsweise auch nur 15 bar oder sogar noch weniger betragen. Die Vermischung des Gases mit der Luft kann dabei im Zylinder selbst erfolgen oder auch schon vor dem Zylinder. Das Luft-Gas-Gemisch wird im Brennraum nach dem Otto-Prinzip fremdgezündet. Diese Fremdzündung wird üblicherweise dadurch bewirkt, dass zu einem geeigneten Moment eine kleine Menge flüssiger Brennstoff in den Brennraum oder in eine Vorkammer eingebracht wird, der sich dann selbstentzündet und dadurch die Fremdzündung des Luft-Gas-Gemisches verursacht. Natürlich ist es auch möglich, die Fremdzündung elektrisch oder auf einem anderen Wege zu realisieren.

Der Grossmotor kann sowohl als Viertakt-Motor als auch als Zweitaktmotor ausgestaltet sein.

Der Aufbau und die einzelnen Komponenten eines Grossmotors, wie beispielsweise das Einspritzsystem für den Flüssigmodus, das Gaszuführsystem für den Gasmodus, das Gaswechselsystem, welches mindestens ein Auslassventil pro Zylinder umfasst, das Abgassystem oder das Turboladersystem für die Bereitstellung der Spül- bzw. Ladeluft, sowie die Kontroll- und Steuerungssysteme für einen Grossdieselmotor sind dem Fachmann sowohl für die Ausgestaltung als Zweitaktmotor als auch für die Ausgestaltung als Viertaktmotor hinlänglich bekannt und bedürfen daher hier keiner weiteren Erläuterung. Der Grossmotor ist als elektronisch gesteuerter Motor ausgestaltet, bei welchem insbesondere das Gaswechselsystem und die Einbringung des jeweiligen Brennstoffs elektronisch gesteuert werden, d.h. die Betätigung der Auslassventile und des Einspritzsystems bzw. des Gaszuführsystems erfolgt mittels elektrischer oder elektronischer Signale von der Kontroll- und Steuervorrichtung des Motors. Diese elektronische Steuerung bietet den Vorteil einer grösstmöglichen Flexibilität, weil solche Betriebsparameter wie der Beginn oder das Ende der Brennstoffzufuhr in die einzelnen Zylinder, oder der Zeitpunkt der Öffnung der Auslassventile oder der Schliesszeitpunkt der Auslassventile frei wählbar sind, und nicht, beispielsweise über eine mechanische Kopplung, an einen bestimmten Kurbelwinkel im Arbeitszyklus gebunden sind.

Bei den hier beschriebenen Ausführungsbeispielen ist der Grossmotor vorzugsweise als längsgespülter Zweitakt-Dual-Fuel Grossdieselmotor ausgestaltet.

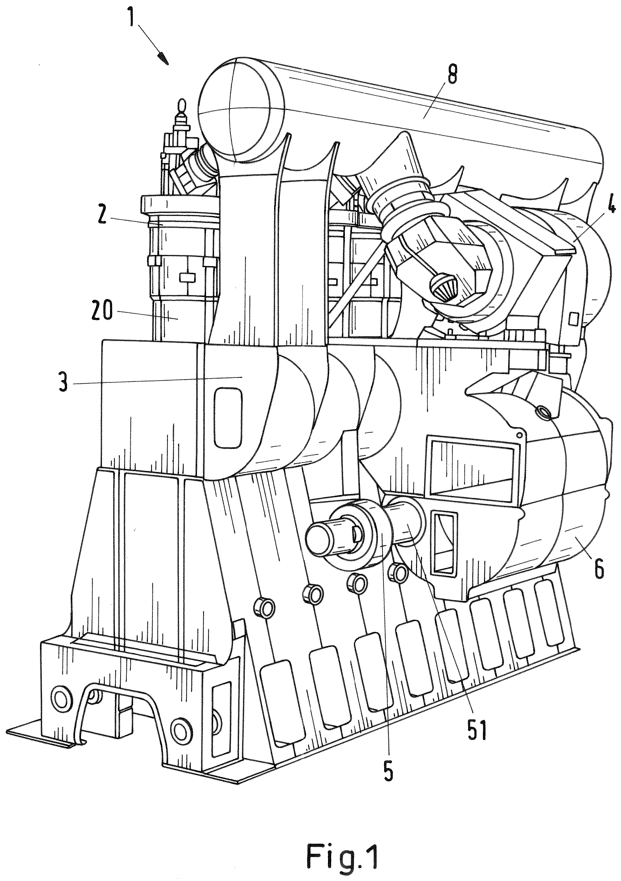

Fig. 1 zeigt eine schematische Darstellung eines Ausführungsbeispiel eines erfindungsgemässen längsgespülten Grossmotors 1. Der längsgespülte Grossmotor 1 umfasst dabei mehrere Zylinder 2, welche jeweils einen Brennraum 20 zur Verbrennung eines Luft-Brennstoffgemisches aufweisen. Die Zylinder 2 umfassen ausserdem Spülluftöffnungen zum Zuführen von Ladeluft in den Zylinder 2, und ein Auslassventil zum Abführen von Verbrennungsgasen aus dem Zylinder 2.

In jedem Zylinder ist ein Kolben (nicht dargestellt), der sich im Betriebszustand zwischen einem oberen Totpunkt und einem unteren Totpunkt hin und her bewegt. Der Kolben ist über eine Kolbenstange (nicht dargestellt) mit einem Kreuzkopf (nicht dargestellt) verbunden, welcher über eine Schubstange (nicht dargestellt) mit einer Kurbelwelle verbunden ist. Der Grossmotor 1 ist also mit einem Kreuzkopfantrieb ausgestaltet.

Der Grossmotor 1 besitzt einen Einlassreceiver 3 für die Ladeluft, welcher mit den Spülluftöffnungen strömungsverbunden ist, sowie einen mittels der Verbrennungsgase antreibbaren Turbolader 4 zum Bereitstellen der Ladeluft im Einlassreceiver 3. Ausserdem ist ein Hilfsgebläse 5, mit welchem zusätzliche Spülluft in den Einlassreceiver 3 eingebracht werden kann, am Einlassreceiver 3 angeordnet.

Wie dies in Fig. 1 zu erkennen ist, erstreckt sich der Einlassreceiver über die gesamte Länge des Grossmotors 1, d.h. entlang aller Zylinder 2 des Grossmotors, die in einer Reihe hintereinander angeordnet sind. Der Einlassreceiver ist vorzugsweise seitlich und am unteren Bereich der Zylinder 2 angeordnet. Der Einlassreceiver 3 beginnt am ersten Zylinder und erstreckt sich dann insbesondere parallel zur Kurbelwelle bis zum letzten Zylinder 2.

Stromaufwärts von dem erfindungsgemässen Hilfsgebläse 5 ist dabei eine Drosselvorrichtung 51 angeordnet, mit welcher ein Massenstrom der zusätzlichen Spülluft verändert und an die Last des Grossmotors 1 angepasst werden kann. Die zusätzliche Spülluft, welche vom Hilfsgebläse 5 zum Einlassreceiver 3 geführt wird, stammt hierbei von einem Kühler 6 des Grossmotors 1, der auch als Ladeluftkühler 6 bezeichnet wird. Die Drosselvorrichtung 51 ist dabei an einer geeigneten Stelle zwischem dem Kühler 6 und dem Hilfsgebläse 5 angeordnet.

Stromaufwärts beziehungsweise stromabwärts beziehen sich im Rahmen der Erfindung also auf die Strömungsrichtung der zusätzlichen Spülluft.

Ein wesentlicher Aspekt der Erfindung ist es dabei, dass das Hilfsgebläse 5 weder direkt noch indirekt von den Verbrennungsgasen des Grossmotors 1 angetrieben wird, sondern einen Antrieb umfasst, der unabhängig von den Verbrennungsgasen bzw. den Abgasen des Grossmotors 1 ist. Denn gerade in niedrigen Lastbereichen des Grossmotors 1 steht nicht genügend Verbrennungsgas zur Verfügung, damit der Turbolader 4 ausreichend Ladeluft zur Verfügung stellen kann. Das Hilfsgebläse 5 ist ja gerade für solche Betriebszustände vorgesehen, bei denen kein ausreichender Massenstrom an Verbrennungsgas bzw. Abgas zur Verfügung steht, um den Turbolader so anzutreiben, dass er ausreichend Spülluft zur Verfügung stellen kann. Daher wird das Hilfsgebläse 5 - im Unterschied zu dem Turbolader 4 - mit einem Antrieb angetrieben, der unabhängig von den Verbrennungsgasen ist, beispielsweise mit einem Elektromotor.

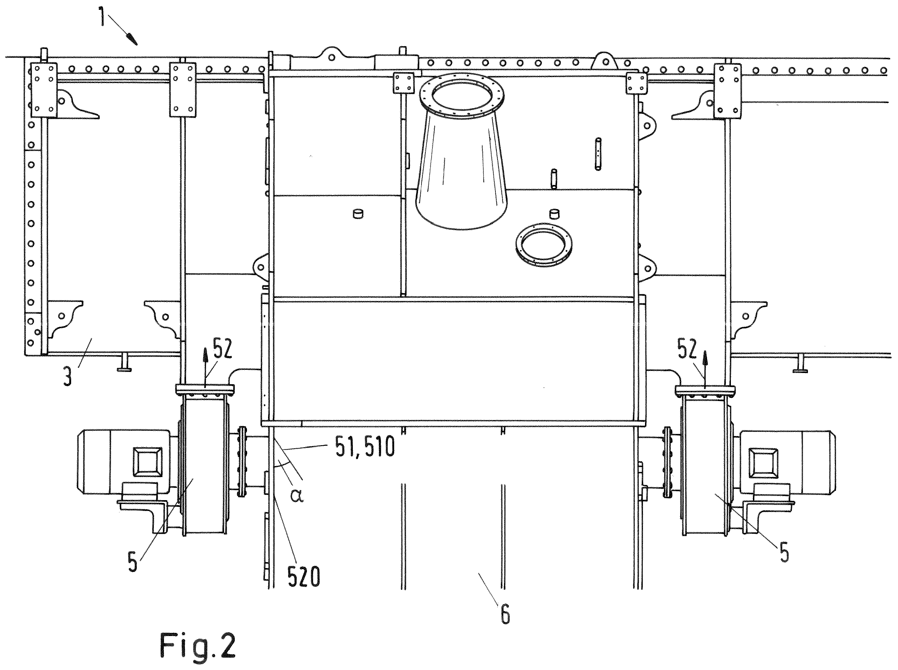

Fig. 2 zeigt ein weiteres Ausführungsbeispiel des erfindungsgemässen längsgespülten Grossmotors 1. Der Grossmotor 1 umfasst hierbei zwei Hilfsgebläse 5, welche seitlich am Kühler 6 vorgesehen sind. Die zusätzlich Spülluft 52 fliesst vom Kühler 6 an der Drosselvorrichtung 51 vorbei, durch das Hilfsgebäse 5 zum Einlassreceiver 3.

Die Drosselvorrichtung 51 umfasst hierbei eine Drosselklappe 510, wobei ein Öffnungswinkel α der Drosselklappe an die Last des Grossmotors 1 angepasst werden kann.

Ist der Öffnungswinkel α 90°, ist die Drosselklappe 510 vollständig geöffnet und es wird ein maximaler Massenstrom der zusätzlichen Spülluft 52 vom Hilfsgebläse 5 zum Einalssreceiver 3 ermöglicht. Ist der Öffnungswinkel 0°, ist die Drosselklappe 510 vollständig geschlossen und es erfolgt kein Massenstrom von zusätzlicher Spülluft 51 vom Hilfsgebläse 5 zum Einlassreceiver 3.

Die Drosselklappe 510 ist im vorliegenden Ausführungsbeispiel an einer Seite einer Öffnung 520 der Drosselvorrichtung 51 klappbar befestigt.

In oberen Lastbereichen des Grossmotors 1 wird der Öffnungswinkel α vorzugsweise zwischen 45° und 90° eingestellt, insbesondere zwischen 50° und 90°, im speziellen zwischen 60° und 90°, sodass der Eingang des Hilfsgebläses 5 gar nicht oder kaum gedrosselt wird Je nach Lastbereich kann der Öffnungswinkel α selbstverständlich auf jeden Wert zwischen 0° und 90° eingestellt werden.

Gemäss einem erfindunsggemässen Verfahen wird der längsgespülte Grossmotor betrieben, indem der Massenstrom der zusätzlichen Spülluft 52 durch Änderung eines Strömungsquerschnitts stromaufwärts des Hilfsgebläses 5 durch die Drosselvorrichtung 51 eingestellt wird. Das Einstellen der Strömungsquerschnitts erfolgt hierbei über die Drosselvorrichtung 51, insbesondere über die Drosselklappe 510. Der Strömungsquerschnitt nimmt dabei direkt Einfluss auf den Massenstrom der zusätzlichen Spülluft 52.

Wird der Öffnungswinkel α der Drosselklappe 510 verkleinert, verkleinert sich auch der Strömungsquerschnitt und der Massenstrom der zusätzlichen Spülluft 52 zum Einlassreceiver 3 wird verringert. Wird der Öffnungswinkel α der Drosselklappe 510 vergrössert, vergrössert sich auch der Strömungsquerschnitt und der Massenstrom der zusätzlichen Spülluft 52 zum Einlassreceiver 3 wird vergrössert.

Vorzugsweise wird der Strömungsquerschnitt dabei gesteuert und vorzugsweise mit zunehmender Last des Grossmotors 1 mittels der Drosselvorrichtung 51 kontinuierlich oder schrittweise vergrössert. Es sind auch Ausführungsformen möglich, bei welchen Die Drosselvorrichtung 51 zwei oder mehrere diskrete Stellungen hat. Je nach momentaner Last kann dann eine dieser diskreten Stellungen gewählt werden, um den Massenstrom in das Hilfsgebläse auf einen gewünschten Wert einzustellen.

Selbstverständlich kann die Drosselvorrichtung 51 auch andere Einstellvorrichtungen umfassen, um den von dem Hilfsgebläse 5 angesaugten Massenstrom zu verändern. Insbesondere kann die Drosselvorrichtung 51 einen Schieber oder ein Schieberventil zur Drosselung des Luftstroms umfassen.

Alternativ kann der Strömungsquerschnitt stromaufwärts des Hilfsgebläses auch in Abhängigkeit der Last des Grossmotors 1 mittels der Drosselvorrichtung 51 in Abhängigkeit eines vorgebbaren Luft-Brennstoffverhältnis geregelt werden.

Das erfindungsgemässe Verfahren dient in erster Linie dazu, auch in niedrigen Lastbereichen, in welchen der Turbolader 4 zusammen mit dem Hilfsgebläse 5 einen zu grossen Massenstrom an Ladeluft generieren würde, ein optimales Luft-Brennstoff-Verhältnis im Zylinder 2 zu gewährleisten, um insbesondere den eingangs beschriebenen nachteiligen Zustand eines zu hohen Luftanteils im Zylinder und damit Zündaussetzer (zu mageres Gemisch) zu vermeiden. Üblicherweise reagiert der Grossmotor 1 im Gasbetrieb deutlich empfindlicher auf ein nicht korrekt eingestelltes Luft-Brennstoff-Verhältnis, deshalb wird im Folgenden mit beispielhaftem Charakter auf den Gasbetrieb eines Dual-Fuel Grossdieselmotors Bezug genommen. Es versteht sich aber, dass das erfindungsgemässe Verfahren in sinngemäss gleicher Weise auch für den Flüssigmodus vorteilhaft eingesetzt werden kann.

Aufgrund der gesetzlichen Bestimmungen bezüglich der Abgaswerte müssen heute Grossmotoren in Küstennähe häufig im Gasmodus betrieben werden, weil sonst die vorgeschriebenen Grenzwerte für den Abgasausstoss, insbesondere sind dies Stickoxide NOx und Schwefeloxide, nicht mehr eingehalten werden können.

Im Gasmodus sind die Effizienz und die möglichst schadstoffarme Verbrennung des Luft-Gas-Gemisches empfindlich von dem Verhältnis der Menge an Luft und der Menge an Gas abhängig. Dieses Verhältnis wird üblicherweise auch als λ-Wert bezeichnet, welcher das Verhältnis aus einer Masse der für die Verbrennung zur Verfügung stehenden Luft und einer Masse des Gases angibt, welches als Brennstoff verwendet wird.

Das optimale Luft-Gas-Verhältnis hängt von einem vom Grossmotor zu generierenden Antriebsdrehmoment ab und damit von einer gewünschten Geschwindigkeit bzw. der Last, mit welcher der Grossmotor betrieben wird.

Das von dem Grossotor generierte Drehmoment, welches vorzugsweise ein Schiff antreibt, wird häufig als BMEP (Brake Mean Effective Pressure) Drehmoment angegeben, was im Wesentlichen ein über einen Arbeitszyklus (eine Periode der Kolbenbewegung für Zweitakt-Maschinen und zwei Perioden der Kolbenbewegung für Viertakt-Maschinen) gemitteltes Drehmoment ist.

Für einen effizienten und insbesondere schadstoffarmen Betrieb ist es erwünscht, den Grossmotor bei jeder Last zwischen zwei Grenzkurven zu betreiben, nämlich zwischen einer Klopfgrenze (knocking limit) und einer Zündaussetzgrenze (misfiring-limit). Bei Betriebszuständen, die sich jenseits der Klopfgrenze befinden, ist das Luft-Gas-Gemisch oder allgemeiner das Luft-Brennstoffgemisch zu fett, das heisst es ist zu wenig Luft im Gemisch. Ein zu fettes Gemisch kann zu verschiedenen Problemen führen, nämlich dass die Verbrennung zu schnell abläuft (fast combustion), oder dass der Grossmotor zu klopfen beginnt oder dass das Gemisch im Zylinder dann üblicherweise durch Selbstzündung aufgrund des zu hohen Gehalts an Gas zu früh (bezogen auf den Arbeitszyklus) zu verbrennen beginnt (pre-ignition). Bei Betriebszuständen, die jenseits der Zündaussetzgrenze liegen, ist das Luft-Gas-Gemisch zu mager, das heisst es ist nicht genügend Gas für eine optimale Verbrennung im Brennraum vorhanden.

Daher ist man bemüht, den Grossmotor insbesondere im Gasmodus (aber auch im Flüssigmodus) stets in einem optimalen Bereich für das Luft-Brennstoff-Verhältnis zu betreiben, also in einem Bereich, der zwischen der Klopfgrenze und der Zündaussetzgrenze liegt. Im Gasmodus wird der Grossmotor beispielsweise mit einem λ-Wert betrieben, der zwischen 2 und 3 liegt, z.B. im Bereich von 2.5.

In der Praxis kann hierfür der Öffnungswinkel α der Drosselklappe 510 oder ein anders ausgestaltetes Element der Drosselvorrichtung 51 in Abhängigkeit von der Last des Gossmotors 1 eingestellt werden. So ist beispielsweise in einer Lookup-Tabelle für jede Last oder für jeden Lastbereich des Grossmotors 1 ein Wert des Öffnungswinkels α gespeichert, der dann jeweils eine ausreichende, aber nicht zu starke Versorgung der Zylinder 2 mit zusätzlicher Spülluft 52 gewährleisten soll, um den Grossmotor 1 unter der Zündaussetzgrenze zu halten. Typischerweise nimmt der Öffnungswinkel α mit der Last des Grossmotors 1 zu.

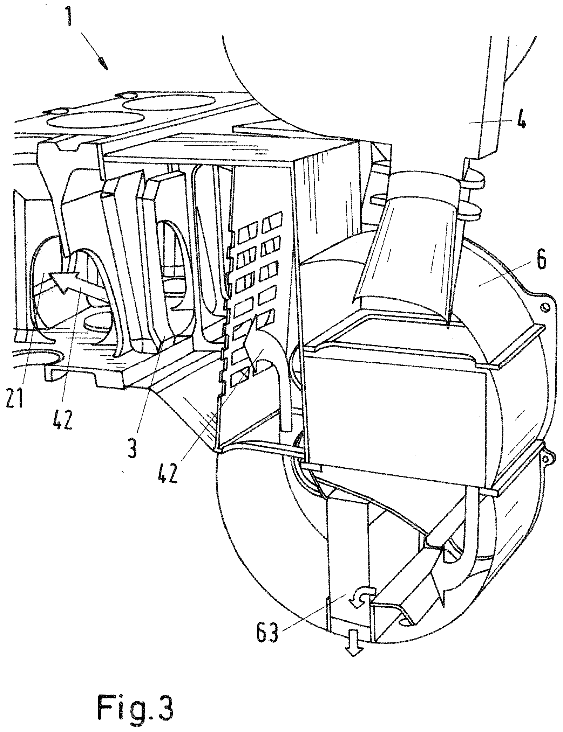

Fig. 3 zeigt einen Querschnitt des Kühlers 6 eines Ausführungsbeispiels des erfindungsgemässen längsgespülten Grossmotors 1. Der Turbolader 4 ist mit dem Kühler 6 strömungsverbunden. Die Ladeluft 42 kann vom Kühler 6 in den Einlassreceiver 3 strömen und vom Einlassreceiver 3 über Spülluftöffnungen 21 zum Zylinder 2 gelangen. Im Kühler 6 ist vorzugsweise ein Wasserabscheider 63 angeordnet mit welcher die Ladeluft 42 vor Zufuhr zum Zylinder 2 getrocknet wird.

## Patentansprüche

1. Längsgespülter Grossmotor mit mindestens einem Zylinder (2), welcher einen Brennraum (20) zur Verbrennung eines Luft-Brennstoffgemisches aufweist, Spülluftöffnungen (21) zum Zuführen von Ladeluft (42) in den Zylinder (2), und ein Auslassventil zum Abführen von Verbrennungsgasen aus dem Zylinder (2), wobei der Grossmotor (1) ferner einen Einlassreceiver (3) für die Ladeluft (42) umfasst, welcher mit den Spülluftöffnungen (21) strömungsverbunden ist, sowie einen mittels der Verbrennungsgase antreibbaren Turbolader (4) zum Bereitstellen der Ladeluft (42) im Einlassreceiver (3), sowie mindestens ein Hilfsgebläse (5), mit welchem zusätzliche Spülluft (52) in den Einlassreceiver (3) einbringbar ist, wobei stromaufwärts des Hilfsgebläses (5) eine Drosselvorrichtung (51, 510) angeordnet ist, mit welcher ein Massenstrom der zusätzlichen Spülluft (52) veränderbar ist, **dadurch gekennzeichnet, dass** das Hilfsgebläse (5) einen Antrieb umfasst, der unabhängig von den Verbrennungsgasen des Grossmotors (1) ist.

2. Längsgespülter Grossmotor nach Anspruch 1, wobei die Drosselvorrichtung (51) eine Drosselklappe (510) und eine durch die Drosselklappe (510) verschliessbare Öffnung umfasst.

3. Längsgespülter Grossmotor nach Anspruch 2, wobei ein Öffnungswinkel (α) der Drosselklappe (510) einstellbar ist.

4. Längsgespülter Grossmotor nach einem der vorrangehenden Ansprüche, wobei das Hilfsgebläse (5) nur bei einer Drehzahl betreibbar ist.

5. Längsgespülter Grossmotor nach einem der vorrangehenden Ansprüche, wobei stromabwärts des Hilfsgebläses (5) eine Rückschlagvorrichtung angeordnet ist, sodass die Ladeluft (42) nur in Richtung des Einlassreceivers (3) strömen kann.

6. Längsgespülter Grossmotor nach einem der vorrangehenden Ansprüche betreibbar in einem Gasmodus.

7. Längsgespülter Grossmotor nach einem der vorrangehenden Ansprüche, wobei der längsgespülte Grossmotor (1) ein Dual-Fuel-Motor ist.

8. Längsgespülter Grossmotor nach einem der vorrangehenden Ansprüche, wobei der längsgespülte Grossmotor (1) ein längsgespülter Zweitakt-Grossmotor ist.

9. Längsgespülter Grossmotor nach einem der vorrangehenden Ansprüche umfassend eine Kontrollvorrichtung zur lastabhängigen Kontrolle des Massenstroms der zusätzlichen Spülluft (52) mittels der Drosselvorrichtung (51, 510).

10. Verfahren zum Betreiben eines längsgespülten Grossmotors (1) nach einem der Ansprüche 1 bis 9 umfassend die folgenden Schritte:
a. Bereitstellen des längsgespülten Grossmotors (1) mit dem Hilfsgebläse (5) und der Drosselvorrichtung (51, 510),
b. Einstellen des Massenstroms der zusätzlichen Spülluft (52) durch Änderung eines Strömungsquerschnitts stromaufwärts des Hilfsgebläses (5) durch die Drosselvorrichtung (51, 510).

11. Verfahren nach Anspruch 10, wobei der Strömungsquerschnitt stromaufwärts des Hilfsgebläses (5) in Abhängigkeit einer Last des Grossmotors mittels der Drosselvorrichtung (51, 510) gesteuert wird.

12. Verfahren nach Anspruch 11, wobei der Strömungsquerschnitt stromaufwärts des Hilfsgebläses (5) mit einer zunehmenden Last des Grossmotors (1) mittels der Drosselvorrichtung (51, 510) kontinuierlich verringert wird.

13. Verfahren nach Anspruch 10, wobei der Strömungsquerschnitt stromaufwärts des Hilfsgebläses (5) in Abhängigkeit einer Last des Grossmotors (1) mittels der Drosselvorrichtung (51, 510) geregelt wird.

14. Verfahren nach Anspruch 13, wobei der Strömungsquerschnitt stromaufwärts des Hilfsgebläses (5) in Abhängigkeit einer Last des Grossmotors (1) mittels der Drosselvorrichtung (51, 510) durch ein vorgebbares Luft-Brennstoffverhältnis geregelt wird.

## Claims

1. Longitudinally scavenged large engine having at least one cylinder (2) which has a combustion chamber (20) for the combustion of an air-fuel mixture, scavenging air openings (21) for feeding charge air (42) into the cylinder (2), and an outlet valve for discharging combustion gases from the cylinder (2), wherein the large engine (1) further comprises an inlet receiver (3) for the charge air (42), which inlet receiver is flow-connected to the scavenging air openings (21), and a turbocharger (4) which can be driven by means of the combustion gases for providing the charge air (42) in the inlet receiver (3), and at least one auxiliary fan (5) with which additional scavenging air (52) can be introduced into the inlet receiver (3), wherein a throttle device (51, 510) is arranged upstream of the auxiliary fan (5), with which throttle device a mass flow of the additional scavenging air (52) can be changed, **characterized in that** the auxiliary fan (5) comprises a drive which is independent of the combustion gases of the large engine (1).

2. Longitudinally scavenged large engine according to claim 1, wherein the throttle device (51) comprises a throttle flap (510) and an opening which can be closed by the throttle flap (510).

3. Longitudinally scavenged large engine according to claim 2, wherein an opening angle (α) of the throttle flap (510) is adjustable.

4. Longitudinally scavenged large engine according to anyone of the preceding claims, wherein the auxiliary fan (5) can be operated only at one rotational speed.

5. Longitudinally scavenged large engine according to anyone of the preceding claims, wherein a non-return device is arranged downstream of the auxiliary fan (5), with the result that the charge air (42) can flow only in the direction of the inlet receiver (3).

6. Longitudinally scavenged large engine according to anyone of the preceding claims, which can be operated in a gas mode.

7. Longitudinally scavenged large engine according to anyone of the preceding claims, wherein the longitudinally scavenged large engine (1) is a dual-fuel engine.

8. Longitudinally scavenged large engine according to anyone of the preceding claims, wherein the longitudinally scavenged large engine (1) is a longitudinally scavenged two-stroke large engine.

9. Longitudinally scavenged large engine according to anyone of the preceding claims, comprising a monitoring device for load-dependent monitoring of the mass flow of the additional scavenging air (52) by means of the throttle device (51, 510).

10. Method for operating a longitudinally scavenged large engine (1) according to anyone of claims 1 to 9, comprising the following steps:
a. providing the longitudinally scavenged large engine (1) with the auxiliary fan (5) and the throttle device (51, 510),
b. setting the mass flow of the additional scavenging air (52) by changing a flow cross section upstream of the auxiliary fan (5) by the throttle device (51, 510).

11. Method according to claim 10, wherein the flow cross section upstream of the auxiliary fan (5) is controlled by means of the throttle device (51, 510) in dependence on a load of the large engine.

12. Method according to claim 11, wherein the flow cross section upstream of the auxiliary fan (5) is continuously reduced with increasing load of the large engine (1) by means of the throttle device (51, 510).

13. Method according to claim 10, wherein the flow cross section upstream of the auxiliary fan (5) is regulated by means of the throttle device (51, 510) in dependence on a load of the large engine (1).

14. Method according to claim 13, wherein the flow cross section upstream of the auxiliary fan (5) is regulated by means of the throttle device (51, 510) in dependence on a load of the large engine (1) by a predeterminable air-fuel ratio.

## Revendications

1. Gros moteur à balayage longitudinal avec au moins un cylindre (2), qui présente une chambre de combustion (20) pour la combustion d'un mélange air-carburant, des ouvertures d'air de balayage (21) pour l'amenée d'air de charge (42) dans le cylindre (2), et une soupape de sortie pour l'évacuation de gaz de combustion hors du cylindre (2), le gros moteur (1) comprenant en outre un récepteur d'admission (3) pour l'air de charge (42), qui est en liaison fluidique avec les ouvertures d'air de balayage (21), ainsi qu'un turbocompresseur (4) pouvant être entraîné au moyen des gaz de combustion pour la mise à disposition de l'air de charge (42) dans le récepteur d'admission (3), ainsi qu'au moins un ventilateur auxiliaire (5), avec lequel de l'air de balayage supplémentaire (52) peut être introduit dans le récepteur d'admission (3), un dispositif d'étranglement (51, 510) étant disposé en amont du ventilateur auxiliaire (5), avec lequel un débit massique de l'air de balayage supplémentaire (52) peut être modifié, **caractérisé en ce que** le ventilateur auxiliaire (5) comprend un entraînement, qui est indépendant des gaz de combustion du gros moteur (1).

2. Gros moteur à balayage longitudinal selon la revendication 1, le dispositif d'étranglement (51) comprenant un clapet d'étranglement (510) et une ouverture pouvant être fermée par le clapet d'étranglement (510).

3. Gros moteur à balayage longitudinal selon la revendication 2, un angle d'ouverture (α) du clapet d'étranglement (510) étant réglable.

4. Gros moteur à balayage longitudinal selon l'une quelconque des revendications précédentes, le ventilateur auxiliaire (5) ne pouvant fonctionner qu'à une vitesse de rotation.

5. Gros moteur à balayage longitudinal selon l'une quelconque des revendications précédentes, un dispositif anti-retour étant disposé en aval du ventilateur auxiliaire (5), de sorte que l'air de charge (42) ne puisse s'écouler que dans la direction du récepteur d'admission (3).

6. Gros moteur à balayage longitudinal selon l'une quelconque des revendications précédentes, pouvant fonctionner dans un mode gaz.

7. Gros moteur à balayage longitudinal selon l'une quelconque des revendications précédentes, le gros moteur à balayage longitudinal (1) étant un moteur bicarburant.

8. Gros moteur à balayage longitudinal selon l'une quelconque des revendications précédentes, le gros moteur à balayage longitudinal (1) étant un gros moteur à balayage longitudinal à deux temps.

9. Gros moteur à balayage longitudinal selon l'une quelconque des revendications précédentes, comprenant un dispositif de contrôle pour le contrôle dépendant de la charge du débit massique de l'air de balayage supplémentaire (52) au moyen du dispositif d'étranglement (51, 510).

10. Procédé pour faire fonctionner un gros moteur à balayage longitudinal (1) selon l'une quelconque des revendications 1 à 9, comprenant les étapes suivantes :
a. mise à disposition du gros moteur à balayage longitudinal (1) avec le ventilateur auxiliaire (5) et le dispositif d'étranglement (51, 510),
b. réglage du débit massique de l'air de balayage supplémentaire (52) par modification d'une section transversale d'écoulement en amont du ventilateur auxiliaire (5) à l'aide du dispositif d'étranglement (51, 510).

11. Procédé selon la revendication 10, la section transversale d'écoulement en amont du ventilateur auxiliaire (5) étant commandée en fonction d'une charge du gros moteur au moyen du dispositif d'étranglement (51, 510).

12. Procédé selon la revendication 11, la section transversale d'écoulement en amont du ventilateur auxiliaire (5) étant réduite en continu avec une charge croissante du gros moteur (1) au moyen du dispositif d'étranglement (51, 510).

13. Procédé selon la revendication 10, la section transversale d'écoulement en amont du ventilateur auxiliaire (5) étant régulée en fonction d'une charge du gros moteur (1) au moyen du dispositif d'étranglement (51, 510).

14. Procédé selon la revendication 13, la section transversale d'écoulement en amont du ventilateur auxiliaire (5) étant régulée en fonction d'une charge du gros moteur (1) au moyen du dispositif d'étranglement (51, 510) par un rapport air-carburant pouvant être prédéfini.
